# EUROPÄISCHE PATENTANMELDUNG

(11) **EP 1 398 210 A2**
(43) Veröffentlichungstag der Anmeldung: **17.03.2004**
(21) Anmeldenummer: 03019965.7
(22) Anmeldetag: 03.09.2003
(51) Int. Cl.: B60Q 1/10, B60Q 1/12, F21V 14/04

(54) **Scheinwerfer für ein Kraftfahrzeug**

(30) Priorität: 14.09.2002 DE 10242865
(71) Anmelder: ADAM OPEL AG, 65423 Rüsselsheim (DE)
(72) Erfinder: Gottwald, Wolfgang, 65719 Hofheim (DE)

(57) **Zusammenfassung**

Ein Scheinwerfer für ein Kraftfahrzeug ist für eine Verkehrsart, nämlich Rechtsverkehr oder Linksverkehr, ausgelegt, und strahlt ein asymmetrisches Abblendlichtbündel aus, das auf der eigenen Verkehrsseite eine größere Reichweite als auf der Gegenverkehrsseite aufweist, wobei ein Scheinwerferbauteil (4) mittels von einem Steuergerät (10) beaufschlagter Stellelemente (7) zur vertikalen Leuchtweitenregulierung sowie zur horizontalen Kurvenlichtregulierung vorgesehen ist. Das Steuergerät (10) ist mit einem elektrischen Bauteil (19) verbunden, dessen Manipulation bei einem Wechsel in die jeweils andere Verkehrsart ein Verschwenken des Scheinwerferbauteils (4) derart bewirkt, dass die Reichweite des Abblendlichtbündels keine Blendung des Gegenverkehrs verursacht.

## Beschreibung

Die Erfindung bezieht sich auf einen Scheinwerfer für ein Kraftfahrzeug, der für eine Verkehrsart, nämlich Rechtsverkehr oder Linksverkehr, ausgelegt ist, und der ein asymmetrisches Abblendlichtbündel ausstrahlt, das auf der eigenen Verkehrsseite eine größere Reichweite als auf der Gegenverkehrsseite aufweist, wobei ein Scheinwerferbauteil mittels von einem Steuergerät beaufschlagter Stellelemente zur vertikalen Leuchtweitenregulierung sowie zur horizontalen Kurvenlichtregulierung vorgesehen ist.

Die DE 100 44 391 A1 offenbart einen Scheinwerfer für ein Kraftfahrzeug, der für eine Verkehrsart Rechtsverkehr oder Linksverkehr ausgelegt ist und durch den ein Abblendlichtbündel ausgesandt wird, das eine asymmetrische obere Hell-Dunkel-Grenze aufweist. Hierdurch besitzt das Abblendlichtbündel auf der eigenen Verkehrsseite eine größere Reichweite als auf der Gegenverkehrsseite. Zur Veränderung der Leuchtweite des vom Scheinwerfer ausgesandten Abblendlichtbündels ist eine Leuchtweiteverstelleinrichtung vorgesehen. Beim Wechsel in die andere Verkehrsart, als die für die der Scheinwerfer ausgelegt ist, wird die Leuchtweite des vom Scheinwerfer ausgesandten Abblendlichtbündels mittels der Leuchtweiteverstelleinrichtung derart verringert, dass dessen Reichweite auf der Gegenverkehrsseite der anderen Verkehrsart soweit reduziert ist, dass dieses keine Blendung des Gegenverkehrs verursacht.

Im Weiteren ist aus der DE 199 39 026 A1 ein Automobilscheinwerfer bekannt, der einen Reflektor und eine darin angebrachte Lampe umfasst. Der Reflektor besitzt eine reflektierende Oberfläche, die wahlweise zwei Arten von Abblendlichtbündeln erzeugen kann, nämlich eines für Linksverkehr und eines für Rechtsverkehr, indem sie mit einer Lampe zusammenwirkt, die in entsprechender Art und Weise eine von zwei vorgegebenen Winkelstellungen einnimmt. Der Reflektor trägt eine Platte, die bezüglich dieses Reflektors drehbar ist und auf der die Lampe festgelegt ist. Darüber hinaus sind Mitführmittel vorhanden, um die Platte von Hand bis in die eine oder andere der beiden Betriebsstellungen zu drehen, wobei jede Betriebsstellung einer gegebenen Winkelstellung der Lampe entspricht. Zwischen der durch die Platte und die Lampe gebildeten Einheit und einem festen Teil des Scheinwerfers sind Mittel vorgesehen, um eine stabile Lage der Platte in jeder ihrer Betriebsstellungen zu gewährleisten.

Ferner beschreibt die EP 1 033 528 A2 einen Scheinwerfer für ein Kraftfahrzeug mit einem zwei Brennorte aufweisenden Reflektor und mit einer zwischen einer Linse und dem Reflektor angeordneten Blendenwelle, die um eine horizontale und quer zur optischen Achse verlaufenden Drehachse in mehrere Drehstellungen verstellbar ist und deren Mantelfläche für jede Drehstellung eine Brennlinie aufweist, die eine Hell-Dunkel-Grenze einer Lichtfigur erzeugt. Die Blendenwelle weist eine erste und eine zweite Gruppe von benachbart zueinander verlaufenden Brennlinien auf, wobei die Brennlinien der ersten Gruppe Lichtfiguren für den Rechtsverkehr und die Brennlinien der zweiten Gruppe Lichtfiguren für Linksverkehr erzeugen. Die äußeren Brennlinien der Gruppen erzeugen die größte und kleinste Lichtfigur der jeweiligen Gruppe.

Darüber hinaus ist aus der Praxis ein Scheinwerfer bekannt, der ein schwenkbares Scheinwerferbauteil umfasst und dessen Abblendlichtbündel beispielsweise während einer Kurvenfahrt rechnergesteuert an die jeweilige Fahrtrichtung des Kraftfahrzeuges oder dessen Leuchtweite in Abhängigkeit zur Lage des Kraftfahrzeuges auf der Straße angepasst wird, um eine optimierte Ausleuchtung der Straße zu gewährleisten. Hierzu steht das Scheinwerferbauteil mit Stellelementen in Verbindung, die wiederum mit einem Steuergerät gekoppelt sind und mittels denen die Schwenkbewegung des Scheinwerferbauteils bewerkstelligt wird. Aufgrund der relativ aufwendigen Gestaltung dieses Scheinwerfers ist das Platzangebot für eine Blende zum Umschalten der Lichtverteilung des Abblendlichtbündels bei einem Wechsel von Rechtsverkehr auf Linksverkehr sehr gering.

Es ist Aufgabe der Erfindung, einen Scheinwerfer der eingangs genannten Art zu schaffen, bei dem eine Umschaltung der Lichtverteilung des Abblendlichtbündels bei einem Wechsel von Rechtsverkehr auf Linksverkehr oder umgekehrt mit einfachen Mitteln und ohne zusätzlichen Platzbedarf zu bewerkstelligen ist.

Erfindungsgemäß wird die Aufgabe dadurch gelöst, dass das Steuergerät mit einem elektrischen Bauteil verbunden ist, dessen Manipulation bei einem Wechsel in die jeweils andere Verkehrsart ein Verschwenken des Scheinwerferbauteils derart bewirkt, dass die Reichweite des Abblendlichtbündels keine Blendung des Gegenverkehrs verursacht.

Das elektrische Bauteil kann an einer beliebigen Stelle des Kraftfahrzeuges angeordnet werden, so dass hierfür kein zusätzlicher Platzbedarf im Scheinwerfer erforderlich ist. Durch die Manipulation des Bauteils, beispielsweise eine Druck- oder Drehbeaufschlagung eines dem Bauteil zugeordneten Betätigungselementes, erhält das Steuergerät ein Signal, woraufhin es die z.B. als linear verstellbare Aktuatoren ausgebildeten Stellelemente anspricht, um das Scheinwerferbauteil in eine im Steuergerät für die jeweilige Verkehrsart gespeicherte Position zu verschwenken, in der das Abblendlichtbündel eine Reichweite aufweist, in der es keine Blendung des Gegenverkehrs bewirkt.

Zur Realisierung einer kostengünstigen Lösung für ein Kraftfahrzeug, mit dem kein häufiger Wechsel zwischen Rechtsverkehr und Linksverkehr oder umgekehrt stattfindet, ist zweckmäßigerweise das elektrische Bauteil als Sicherung ausgebildet, deren Entfernen oder Einfügen in einen Stromkreis des Steuergerätes das Verschwenken des Scheinwerferbauteils bewirkt. Bei dieser so genannten Touristenlösung erfolgt das Umschalten der Lichtverteilung des Abblendlichtbündels bei einem Wechsel von Rechtsverkehr auf Linksverkehr oder umgekehrt durch die Handhabung der Sicherung, die selbstverständlich auch als elektrische Brücke oder dergleichen ausgeführt sein kann.

Um bei einem häufigen Wechsel von Rechtsverkehr auf Linksverkehr oder umgekehrt ein komfortables Umschalten der Lichtverteilung des Abblendlichtbündels zu erreichen, ist vorzugsweise das elektrische Bauteil als Schalter ausgebildet, der über ein Bus-System mit dem Steuergerät kommuniziert und dessen Beaufschlagung das Verschwenken des Scheinwerferbauteils bewirkt. Der Schalter kann beispielsweise in einen Lenkstockschalter integriert sein. Auch der Abblendlichtschalter ist als Schalter geeignet, wobei beispielsweise durch eine Mehrfachbeaufschlagung des Abblendlichtschalters die Umschaltung der Lichtverteilung erfolgt.

Nach einer vorteilhaften Weiterbildung des Erfindungsgedankens verschwenken die Stellelemente das Scheinwerferbauteil zur Anpassung der blendfreien Reichweite des Abblendlichtbündels bidirektional. Somit wird die Hell-Dunkel-Grenze des durch das Abblendlichtbündel beleuchteten Bereichs in zwei Achsen verschoben, um eine unerwünschte Blendung des Gegenverkehrs auszuschließen.

Bei einem relativ einfach aufgebauten Scheinwerfer ist zweckmäßigerweise das Scheinwerferbauteil ein Reflektor des Scheinwerfers. Durch das Verschwenken des Reflektors ist eine Regulierung der Reichweite des Abblendlichtbündels derart sichergestellt, dass es keine Blendung des Gegenverkehrs verursacht.

Vorzugsweise ist das Scheinwerferbauteil ein an einem Aufnahmeteil gehaltertes und um eine vertikale Achse sowie eine horizontale Achse verschwenkbares Lichtmodul. Hierbei wird nicht nur der Reflektor, sondern auch eine Lampe des Scheinwerfers verschwenkt.

Um ein Verschwenken des Lichtmoduls bei einem kompakten Aufbau des Scheinwerfers zu erzielen, ist bevorzugt jedes der Stellelemente einerseits über ein Gelenk an dem Reflektor oder dem Lichtmodul und andererseits über ein Gelenk an demselben Aufnahmeteil für den Reflektor oder das Lichtmodul befestigt.

Zweckmäßigerweise ist das Steuergerät über das Bus-System mit den Stellelementen gekoppelt. Vorteilhafterweise ist das Steuergerät Bestandteil einer automatischen Scheinwerfer-Regeleinrichtung. Eine solche Regeleinrichtung wird beispielsweise beim so genannten adaptive forward lightning (AFL) eingesetzt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:
- Fig. 1: eine schematische Darstellung eines erfindungsgemäßen Scheinwerfers in der Draufsicht und
- Fig. 2: eine Darstellung eines vor dem Scheinwerfer angeordneten Messschirms.

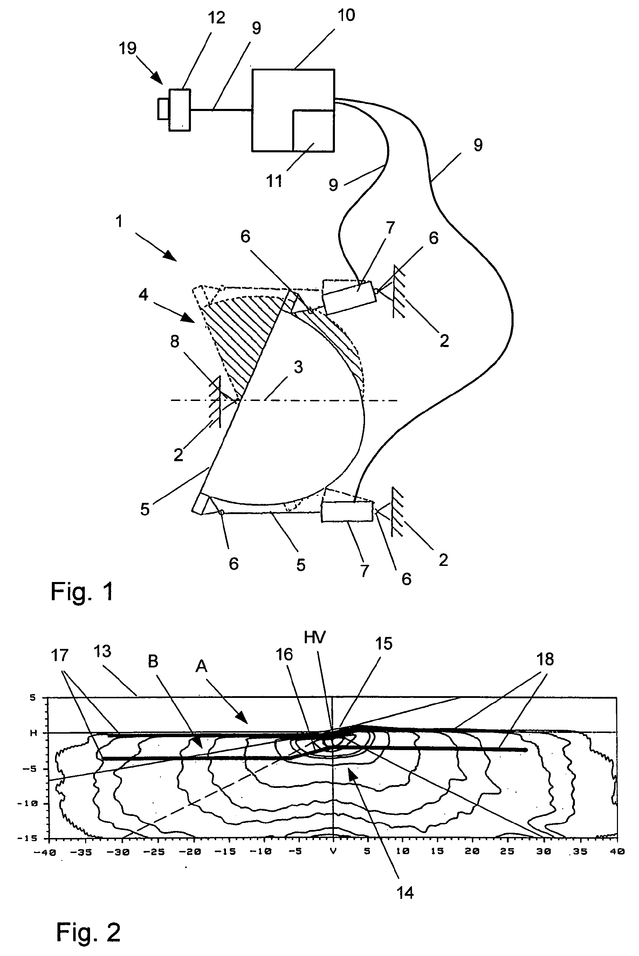

Der Scheinwerfer 1 nach Fig. 1 umfasst ein an einem Aufnahmeteil 2 um eine horizontale Achse 3 und eine vertikale Achse schwenkbar gelagertes Scheinwerferbauteil 4, nämlich ein Lichtmodul 5, wobei das schematisch dargestellte Aufnahmeteil 2 als ein topfförmiges Scheinwerfergehäuse mit einer lichtdurchlässigen Abschlussscheibe ausgebildet ist. Das Lichtmodul 5 steht über Gelenke 6 mit Stellelementen 7 in Verbindung, wobei zwischen jedem der Stellelemente 7 und einer jeweils benachbarten Anbindungsstelle des Aufnahmeteils 2 ein Gelenk 6 angeordnet ist.

Mittig zwischen den beiden Gelenken 6 der Anbindungsstellen hindurch verläuft die vertikale Achse zwischen dem vorderen Randbereich des Lichtmoduls 5 und einer Lagerstelle 8. Bei einer synchronen Bewegung der Stellelemente 5 in der einen Richtung schwenkt das Lichtmodul 5 um die durch die Lagerstelle 8 verlaufende horizontale Achse 3 und bei einem synchronen Bewegen der Stellelemente 7 in der anderen Richtung verschwenkt das Lichtmodul 5 um die durch die Lagerstelle 8 verlaufende vertikale Achse.

Die Stellelemente 7 stehen über ein Bus-System 9 mit einem Steuergerät 10 in Verbindung, das einen nicht flüchtigen Speicher 11 zum überschreibbaren Einspeichern von Einstellungen des Lichtmoduls 3 definierenden Einstellwerten umfasst. In seiner Grundeinstellung ist das Lichtmodul für die Verkehrsart Rechtsverkehr justiert, wobei in den Speicher ein weiterer Einstellwert für die Verkehrsart Linksverkehr eingeschrieben ist. Um den Einstellwert für die Verkehrsart Linksverkehr aus dem Speicher 11 des Steuergerätes 10 abzurufen, ist ein als Schalter 12 ausgebildetes elektrisches Bauteil 19 mit dem Steuergerät 10 gekoppelt. Nach der Beaufschlagung des Schalters 12 wird das Lichtmodul 5 mittels der Stellelemente 7 derart bidirektional verschwenkt, dass es die Lage entsprechend dem abgerufenen Einstellwert einnimmt und die Reichweite eines vom Scheinwerfer 1 erzeugten Abblendlichtbündels derart bemessen ist, dass dieses keine Blendung des Gegenverkehrs verursacht.

Fig. 2 zeigt einen Messschirm 13, der beabstandet vor den Scheinwerfer 1 angeordnet ist und der durch vom Scheinwerfer ausgesandte Abblendlichtbündel beleuchtet wird. Der Messschirm 13 repräsentiert eine Projektion einer vor dem Scheinwerfer 1 liegenden Fahrbahn mit entsprechender Ausleuchtung. Eine horizontale Mittelebene H und eine vertikale Mittelebene V mit einem gemeinsamen Schnittpunkt HV sind auf dem Messschirm 13 dargestellt. Im Weiteren ist ein den Beleuchtungsbereich 14 des Scheinwerfers 1 begrenzender Kurvenverlauf A mit einer Hell-Dunkel-Grenze 15 des für die Verkehrsart Rechtsverkehr eingestellten Scheinwerfers 1 erkennbar. Bei einem Wechsel der Verkehrsart wird der Scheinwerfer 1 nach der Betätigung des Schalters 12 durch eine entsprechende an die Stellelemente 7 gerichtete Signalgebung des Steuergerätes 10 auf die Verkehrsart Linksverkehr umgestellt, wobei das Lichtmodul 5 mittels der ihm zugeordneten Stellelemente 7 bidirektional verschwenkt wird. Hiernach ergibt sich der auf dem Messschirm 13 erkennbare Kurvenverlauf B mit der gegenüber dem Kurvenverlauf A verschobenen Hell-Dunkel-Grenze 16.

Beide Hell-Dunkel-Grenzen 15, 16 weisen einen ansteigenden Verlauf auf, der von einer linken Horizontalen 17 ausgeht und in eine rechte Horizontale 18 mündet. Hierbei entspricht der links von der vertikalen Mittelebene V dargestellte Bereich die Gegenverkehrsseite bei der Verkehrsart Rechtsverkehr und der Bereich auf der rechten Seite des Messschirms 13 der eigenen Verkehrsseite.

### Bezugszeichenliste

- 1.: Scheinwerfer
- 2.: Aufnahmeteil
- 3.: horizontale Achse
- 4.: Scheinwerferbauteil
- 5.: Lichtmodul
- 6.: Gelenk
- 7.: Stellelement
- 8.: Lagerstelle
- 9.: Bus-System
- 10.: Steuergerät
- 11.: Speicher
- 12.: Schalter
- 13.: Messschirm
- 14.: Beleuchtungsbereich
- 15.: Hell-Dunkel-Grenze
- 16.: Hell-Dunkel-Grenze
- 17.: Horizontale
- 18.: Horizontale
- 19.: Bauteil

- A: Kurvenverlauf
- B: Kurvenverlauf
- H: horizontale Mittelebene
- V: vertikale Mittelebene
- HV: Schnittpunkt

## Patentansprüche

1. Scheinwerfer für ein Kraftfahrzeug, der für eine Verkehrsart, nämlich Rechtsverkehr oder Linksverkehr, ausgelegt ist, und der ein asymmetrisches Abblendlichtbündel ausstrahlt, das auf der eigenen Verkehrsseite eine größere Reichweite als auf der Gegenverkehrsseite aufweist, wobei ein Scheinwerferbauteil (4) mittels von einem Steuergerät (10) beaufschlagter Stellelemente (7) zur vertikalen Leuchtweitenregulierung sowie zur horizontalen Kurvenlichtregulierung vorgesehen ist, **dadurch gekennzeichnet, dass** das Steuergerät (10) mit einem elektrischen Bauteil (19) verbunden ist, dessen Manipulation bei einem Wechsel in die jeweils andere Verkehrsart ein Verschwenken des Scheinwerferbauteils (4) derart bewirkt, dass die Reichweite des Abblendlichtbündels keine Blendung des Gegenverkehrs verursacht.

2. Scheinwerfer nach Anspruch 1, **dadurch gekennzeichnet, dass** das elektrische Bauteil (19) als Sicherung ausgebildet ist, deren Entfernen oder Einfügen in einen Stromkreis des Steuergerätes (10) das Verschwenken des Scheinwerferbauteils (4) bewirkt.

3. Scheinwerfer nach Anspruch 1, **dadurch gekennzeichnet, dass** das elektrische Bauteil (19) als Schalter (12) ausgebildet ist, der über ein Bus-System (9) mit dem Steuergerät (10) kommuniziert und dessen Beaufschlagung das Verschwenken des Scheinwerferbauteils (4) bewirkt.

4. Scheinwerfer nach Anspruch 1, **dadurch gekennzeichnet, dass** die Stellelemente (7) das Scheinwerferbauteil (4) zur Anpassung der blendfreien Reichweite des Abblendlichtbündels bidirektional verschwenken.

5. Scheinwerfer nach einem der Ansprüche 1 bis 4, **dadurch gekennzeichnet, dass** das Scheinwerferbauteil (4) ein Reflektor des Scheinwerfers (1) ist.

6. Scheinwerfer nach einem der Ansprüche 1 bis 4, **dadurch gekennzeichnet, dass** das Scheinwerferbauteil (4) ein an einem Aufnahmeteil (2) gehaltertes und um eine vertikale Achse sowie eine horizontale Achse (3) verschwenkbares Lichtmodul (5) ist.

7. Scheinwerfer nach einem der Ansprüche 1 bis 6, **dadurch gekennzeichnet, dass** jedes der Stellelemente (7) einerseits über ein Gelenk (6) an dem Reflektor oder dem Lichtmodul (5) und andererseits über ein Gelenk (6) an demselben Aufnahmeteil (2) für den Reflektor oder das Lichtmodul (5) befestigt ist.

8. Scheinwerfer nach einem der Ansprüche 3 bis 7, **dadurch gekennzeichnet, dass** das Steuergerät (10) über das Bus-System (9) mit den Stellelementen (7) gekoppelt ist.

9. Scheinwerfer nach einem der Ansprüche 1 bis 8, **dadurch gekennzeichnet, dass** das Steuergerät (10) Bestandteil einer automatischen Scheinwerfer-Regeleinrichtung ist.
